# EUROPEAN PATENT SPECIFICATION

(11) **EP 2 383 192 B1**
(45) Date of publication and mention of the grant of the patent: **25.03.2015**
(21) Application number: 11152943.4
(22) Date of filing: 01.02.2011
(51) Int. Cl.: B65D 5/42, B65D 5/66, A23G 3/02, F26B 17/02, B65D 85/10

(54) **Cigarette pack**
Zigarettenpackung
Paquet de cigarettes

(30) Priority: 29.04.2010 GB 201007155
(43) Date of publication of application: 02.11.2011
(62) Divisional of application: 11164660.0
(73) Proprietor: JT International S.A., 1211 Geneva 26 (CH)
(72) Inventor: Collins, Tim, West Horsley Leatherhead, Surrey KT24 6 BL (GB)
(74) Representative: Haley, Stephen

(56) References cited:
- EP-A1- 0 764 595
- WO-A1-02/32786
- WO-A1-2005/037664
- DE-A1-102008 013 173

## Description

The present invention generally relates to the field of packaging for tobacco products. In particular, the present invention relates to a new type of cigarette pack.

Reusable cigarette cases made of hard materials such as metals or polymers have been known for decades. Typically, these hard-shell cases were filled with cigarettes which were sold in soft-shell packs made of paper, which soft-shell packs failed to provide adequate protection for cigarettes, specifically in situations in which users carried those soft-shell packs in pockets of their garments.

Theses hard-shell cases provide an increased amount of protection for cigarettes and, if shaped appropriately, can also be comfortable for users to carry in garment pockets. On the other hand, the necessity to refill these hard-shell cases can be burdensome and awkward for users.

In order to address these problems, cigarette packs made of cardboard were developed. The aim of the cardboard pack was to combine the sturdiness of the hard-shell packs with the disposability and convenience of soft-shell packs. Typically, these packs are made of sturdy cardboard with pronounced edge, and comprise lids which open from the top and allow users to access the cigarettes inside. Whilst these cardboard packs do have advantages over both the soft-shell pack and the hard-shell cases, they have introduced a significant disadvantage over both, namely that of comfort.

Soft-shell packs, whilst providing little protection for cigarettes, are comfortable to carry in garment pockets and, as mentioned above, hard-shell cases, if appropriately shaped, can also be comfortable. Dissimilarly, known cardboard packs are shaped in order to maximise their structural integrity and, as a consequence, are often simply rectangular parallelepipeds, making them very uncomfortable for users.

Moreover, the angular shape of these cardboard packs makes them susceptible to deformation, particularly when the angles of the pack are constrained by a non-linear space, such as that defined by the inside pocket of a user's garment. Such deformation can result in a phenomenon known as "smiling", where the flip-top lid of the pack sits slightly open with respect to the body of the pack, thereby preventing the pack from completely closing in its rest state. When carried in a garment, loose tobacco contained in the pack can find its way into the user's pocket through the aperture created by this "smiling" effect.

Accordingly, there is a clear need for a structurally sturdy cardboard cigarette pack which is also comfortable to carry in a user's garment pocket.

WO2005/037664 and WO02/32786 show packs of non-uniform horizontal cross section. DE 102008013173 A1 discloses a cigarette pack.

In order to solve the problems addressed by the prior art, the present invention provides a cigarette pack according to claim 1 which comprises:
a box having a top face, a bottom face, and a plurality of longitudinal faces connecting the top face to the bottom face, the longitudinal faces including:
   a front face;
   the pack being characterised by:
      a first arched-edged bevel situated on one side of the front face, the first arched-edged bevel being attached to the front face by a first longitudinal curved fold line; and
      a second arched-edged bevel situated on the other side of the front face and being attached to the front face by a second longitudinal curved fold line;
   wherein the first and second longitudinal curved fold lines are curved away from the centre of the front face such that the front face is at least partially concavely bowed in a longitudinal direction;
   the pack further comprising a straight rear face; and
   the plurality of longitudinal faces further including:
      a first plurality of side bevels arranged to connect the first arched-edged bevel to the straight rear face; and
      a second plurality of side bevels arranged to connect the second arched-edged bevel to the straight rear face.

The first and second fold lines are curved away from the centre of the front face such that the front face is concavely bowed in a lateral direction.

The front face is concavely bowed in a longitudinal direction, preferably from a location substantially adjacent the top face to an area substantially adjacent the bottom face.

Preferably, the pack further comprises a lid which is hingedly connected to at least one of the longitudinal faces of the box.

As will be appreciated, the present invention provides several advantages over the prior art. For example, the bowed front face of the pack in accordance with the present invention will make the resulting pack more comfortable when being carried in a garment pocket. Moreover, because the pack in accordance with the present invention comprises an inwardly bowed front face, when the lid is closed, it must be forced over the protrusion created by the bowing of the front face. This protrusion will then bias the lid in the closed position, thereby reducing the problem of a "smiling" lid. Finally, the embodiment of the present invention which comprises curved front and rear folds on the top face of the lid also comprises recesses on the lid which soften its shape, thereby contributing to an increase in the comfort which a user feels when carrying the pack in his or her pocket. Other advantages of the present invention will become apparent when reading the following specific description.

Several specific embodiments of the present invention will now be described with reference to the accompanying drawings, in which:
Figure 1 is a perspective view of a hinged-lid pack in accordance with one embodiment of the present invention;
Figure 2 is a top view of the hinged-lid pack of Figure 1;
Figure 3 is a front view of the hinged-lid pack of Figure 1;
Figure 4 is a side view of the hinged-lid pack of Figure 1;
Figure 5 is a diagram of a blank used to construct the hinged-lid pack of Figure 1;
Figure 5a is a diagram of a blank used as a pack collar for the hinged-lid pack of Figure 1;
Figure 6 is a perspective view of a hinged-lid pack in accordance with a second embodiment of the present invention;
Figure 7 is a top view of the hinged-lid pack of Figure 6;
Figure 8 is a front view of the hinged-lid pack of Figure 6;
Figure 9 is a side view of the hinged-lid pack of Figure 6;
Figure 10 is a diagram of a blank used to construct the hinged-lid pack of Figure 6;
Figure 11 is a perspective view of a hinged-lid pack in accordance with a third embodiment of the present invention;
Figure 12 is a top view of the hinged-lid pack of Figure 11;
Figure 13 is a front view of the hinged-lid pack of Figure 11;
Figure 14 is a side view of the hinged-lid pack of Figure 11; and
Figure 15 is a diagram of a blank used to construct the hinged-lid pack of Figure 11.

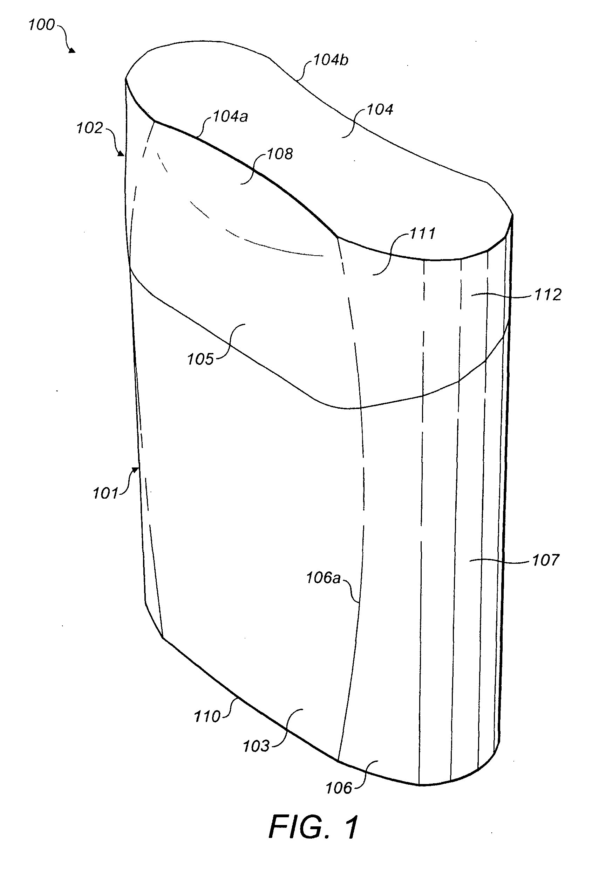

Figure 1 is a perspective view of a hinged-lid pack 100 in accordance with a first embodiment of the present invention. The pack 100 comprises a main body 101 and a lid 102. The main body 101 comprises a bowed front face 103, arched-edged bevels 106, side bevels 107 and bottom face 110. The lid 102 comprises front face 105, recessed front face portion 108, arched-edged bevels 111, top face 104 and side bevels 112.

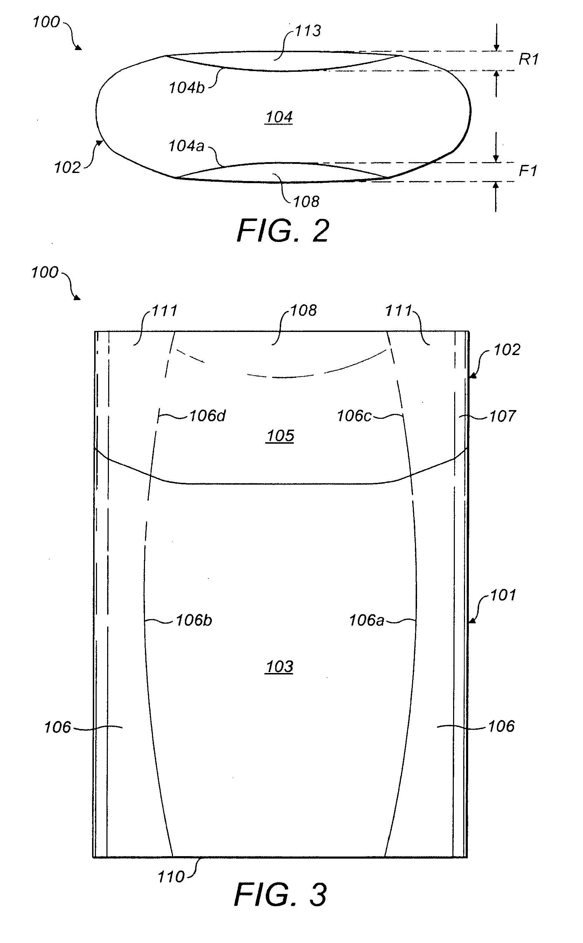

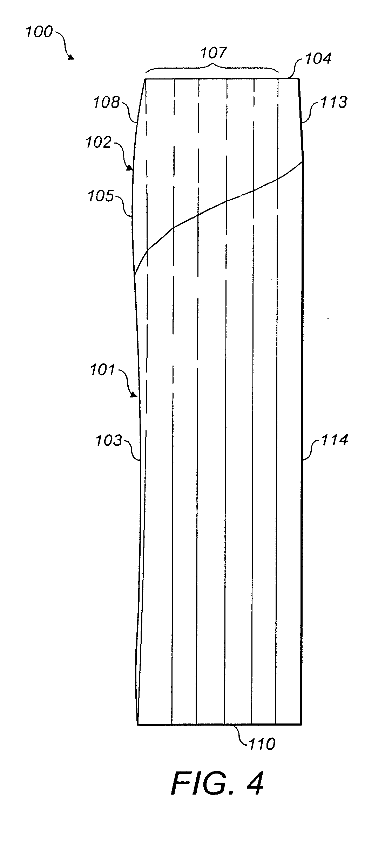

An arched-edged bevel 106 is situated on either side of the bowed front face 103. The arched fold lines 106a, 106b of the arched-edged bevels 106 cause the front face 103 of the pack main body 101 to bow inwardly, as shown in Figure 4. The arched fold lines 106c, 106d of the arched-edged bevels 111 cause the front face 105 of the pack lid 102 to continue the bow of the front face 105 into the bottom portion of the lid 102, as shown in Figure 4. Moreover, the curved front fold 104a and rear fold 104b forming the edges of the top face 104 create the recessed front face portion 108 and slightly recessed rear face portion 113, respectively, as shown in Figure 2.

Figure 2 is a top view of the hinged-lid pack in accordance with a first embodiment of the present invention. As can be seen, the top face 104 is defined by the top edges of the plurality of the arched-edged bevels 106, the plurality of side bevels 107, the curved front fold 104a and the curved rear fold 104b. The curved front fold 104a causes a recess 108 which softens the upper contour of the pack. Similarly, the curved rear fold 104b creates a slight recess 113. Recesses 113 and 108 provide a softening of the pack's top edges. This softening of the top edges allows the pack to be more comfortably carried in a user's garment pocket.

As will be appreciated, the depth of the curved front fold 104a (F1) and the curved rear fold 104b (R2) will influence the shape and angle of recesses 108 and 113, respectively.

Figure 3 is a front view of the hinged-lid pack 100 in accordance with the first embodiment of the present invention. As can be seen from Figure 3, the arched-edged front bevels 106 share a straight vertical fold with the forward-most side bevel 107 on both the right and left side of the pack body 101. Each arched-edged front bevel 106 also has a curved fold 106a, 106b. The curved folds 106a and 106b cooperate in order to cause the front face 103 to bow inwardly, as shown in Figure 4.

Similarly, and as can also be seen in Figure 3, the arched-edges front bevels 111 share a straight vertical fold with the forward-most side bevel 107 on the right and left side of the pack lid 102. Each arched-edged front bevel 111 also has a curved fold 106c, 106d. Curved folds 106c and 106d cooperate such that the bowing of the front face 103 is continued into the bottom portion of the front face 105 of the lid 102.

As is also shown in Figure 3, the front face 105 of the lid comprises a bowed area 108 which is created by curved fold 104a on the top face 104 of the lid 102. As is shown in Figure 4, the bowed area 108 creates a more rounded pack profile. Moreover, the bowed front faces 103 and 105 provide the pack with a shape that is similar to a hip-flask. As a consequence of this shape, the pack is substantially more comfortable to carry in a user's garment pocket than known packs.

Figure 4 is a side view of a pack in accordance with the first embodiment of the present invention. The pack 100 comprises a straight rear face 114, a straight bottom face 110, a straight top face 104 and a plurality of side bevels. As will be appreciated, each of these faces need not be straight. The front face 103 of the pack body 101 is inwardly bowed. The front face 105 of the pack lid 102 continues the shape of the front face 103 of the pack body 101, until it reaches the recessed area 108. The continuity of the bowed front face 103 of the pack body 101 and the bottom portion of the bowed front face 105 of the pack lid 102 (i.e. proximate the point where the body 101 meets the lid 102) is caused by the continuity between the curved folds 106a and 106c and curved folds 106b and 106d, respectively. Again, recess area 108 is created by curved folds 104a on the top of top face 104 of the pack lid 102.

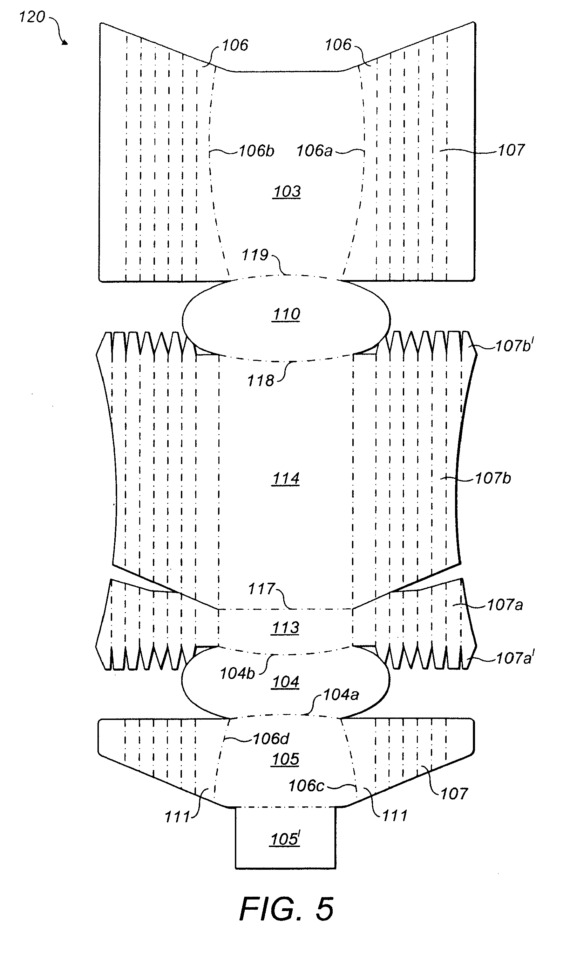

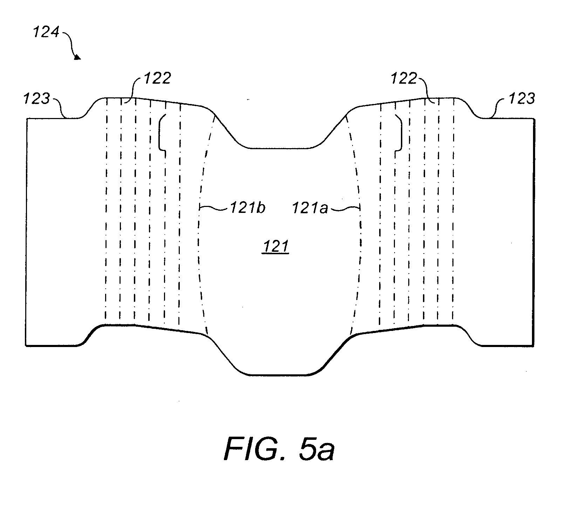

Figure 5 shows a blank 120 for making the pack of Figures 1 to 4. The blank 120 comprises a plurality of panels separated by fold lines (represented by broken lines) and cut lines (represented by solid lines). Panel 105' is connected to front face 105 of the pack lid 102. Arched-edged front bevels 111 are connected to front face 105 by fold lines 106c and 106d. Arched-edged front bevels 111 are connected to side bevels 107 on either side of the pack lid 102. Front face 105 is connected to top face 104 by curved fold 104a.

Top face 104 is connected to the rear face 113 of the pack lid 102 by curved fold 104b. On each side of rear face 113, reinforcement side bevels 107a extend outwardly. Each reinforcement side bevel 107a comprises a fixing tab 107a' at its top edge. Rear face 113 of the pack lid 102 is connected to the rear face 114 of the pack body 101 by fold line 117. On each side of rear face 114, reinforcement side bevels 107b extend outwardly. Each reinforcement side bevel 107b comprises a fixing tab 107b' at its bottom edge. Bottom face 110 is connected to rear face 114 by way of fold line 118. As will be appreciated, the bottom face of a pack in accordance with the present invention can be of any suitable shape, depending on the shape of pack's sides. For example, the shape of the bottom face could be substantially rectangular.

The bottom face 110 is connected to the front face 103 of the pack lid body 101 by way of fold line 119. Front face 103 is connected to arched-edged front bevels 106 by way of fold lines 106a and 106b. Side bevels 107 extend outwardly from the straight edge of arched-edged front bevels 106.

With reference to Figure 5, the method of folding blank 120 will now be described. First, rear face 114 is folded at a right angle with respect to bottom face 110 around fold line 118. Fixing tabs 107b' are then fixed to the inside of bottom face 110. The fixing tabs 107b' can be fixed to the bottom face 110 by any known means including, but not limited to, gluing and bonding.

Then, the front face 103 is folded at a right angle with respect to bottom face 110 around fold line 119. Side bevels 107 are wrapped around corresponding reinforcement side bevels 107b and fixed thereto. The front face 103, bottom face 110 and rear face 114 now form the main part of the pack body 101. At this point, the collar portion 124 (shown in Figure 5a) is folded in on itself such that rear panels 123 at least partially overlap. The rear panels 123 can then be fixed to each other by known methods. The collar is then inserted into the main part of the pack body such that fold lines 121 a and 121 b are adjacent fold lines 106a and 106b, respectively, and reinforcement side bevels 107b overlap side bevels 122 of the collar 124. As will be appreciated, whilst the collar 124 will contribute to the aesthetics of the pack, it will also increase the radial strength of the pack, particularly because collar 124 extends completely around the interior circumference of the pack body 101, and can be fixed thereto.

Once the pack body has been created, panel 105' is folded at a 180 degree angle with respect to front face 105, and is fixed to the inner face thereof. Front face 105 is then folded at a right angle with respect to top face 104 along curved fold line 104a. Top face 104 is then folded at a right angle with respect to rear face 113, along curved fold line 104b. Fixing tabs 107a' are then fixed to the inside of top face 104. The fixing tabs 107a' can be fixed to the top face 104 by any known means including, but not limited to, gluing and bonding. Side bevels 107 of the lid 102 are then wrapped around corresponding reinforcement side bevels 107a and fixed thereto.

As will be appreciated, whilst the blank 120 is flat when initially cut from a piece of cardboard, curved folds 104a, 104b, 106a, 106b, 106c and 106d will result in bowed front faces 103 and 105, as well as recesses 108 and 113.

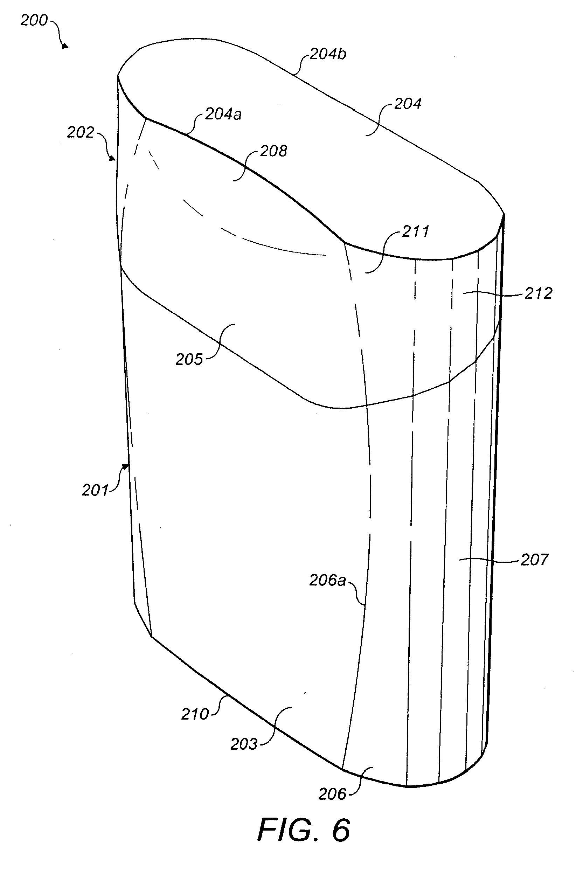

Figure 6 is a perspective view of a hinged-lid pack 200 in accordance with a second embodiment of the present invention. The pack 200 comprises a main body 201 and a lid 202. The main body 201 comprises a bowed front face 203, arched-edged bevels 206, side bevels 207 and bottom face 210. The lid 202 comprises front face 205, recessed front face portion 208, arched-edged bevels 211, top face 204 and side bevels 212.

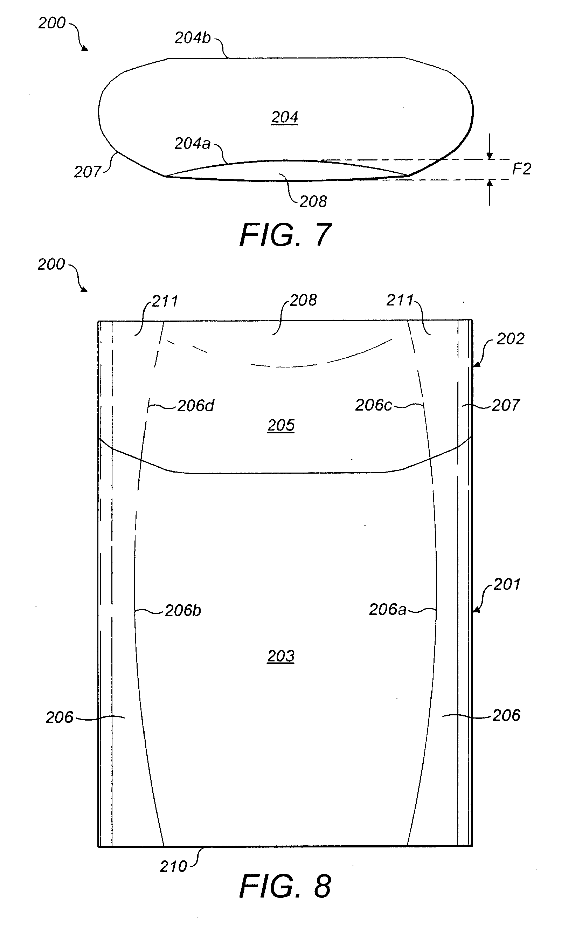

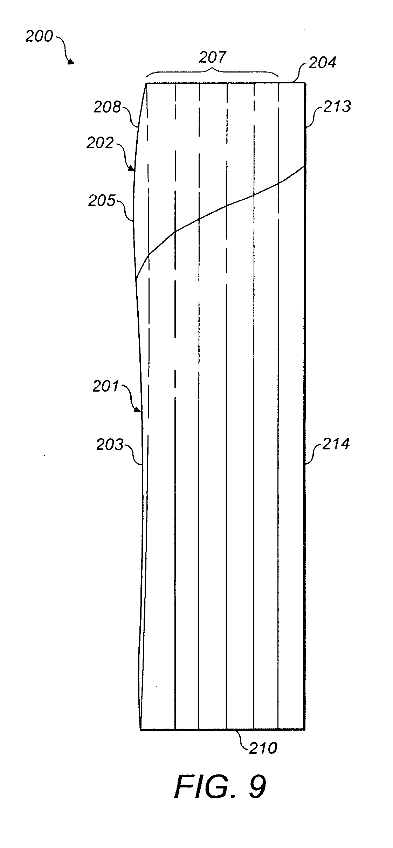

An arched-edged bevel 206 is situated on either side of the bowed front face 203. The arched fold lines 206a, 206b of the arched-edged bevels 206 cause the front face 203 of the pack main body 201 to bow inwardly, as shown in Figure 9. The arched fold lines 206c, 206d of the arched-edged bevels 211 cause the front face 205 of the pack lid 202 to continue the bow of the front face 205 into the bottom portion of lid 202, as shown in Figure 9. Moreover, the curved front fold 204a forming the edge of the top face 204 creates the recessed front face portion 208, as shown in Figure 7. In this second embodiment, because the rear fold 204b of the top face 204 is not inwardly curved, the rear face 213 of the lid 202 will not be recessed.

Figure 7 is a top view of the hinged-lid pack in accordance with the second embodiment of the present invention. As can be seen, the top face 204 is defined by the top edges of the plurality of the arched-edged bevels 211, the plurality of side bevels 207, the curved front fold 204a and the straight rear fold 204b. The curved front fold 204a causes a recess 208 which softens the upper contour of the front face of the pack. Recess 208 provides a softening of the pack's top front edge. This softening of the top front edge allows the pack to be more comfortably carried in a user's garment pocket.

As will be appreciated, the depth of the curved front fold 204a (F2) will influence the shape and angle of recess 208.

Figure 8 is a front view of the hinged-lid pack in accordance with the second embodiment of the present invention. As can be seen from Figure 8, the arched-edged front bevels 206 share a straight vertical fold with the forward-most side bevel 207 on both the right and left side of the pack body 201. Each arched-edged front bevel 206 also has a curved fold 206a, 206b. The curved folds 206a and 206b cooperate in order to cause the front face 203 to bow inwardly, as shown in Figure 9.

Similarly, and as can also be seen in Figure 8, the arched-edged front bevels 211 share a straight vertical fold with the forward-most side bevel 207 on both the right and left side of the pack lid 202. Each arched-edged front bevel 211 also has a curved fold 206c, 206d. Curved folds 206c and 206d cooperate in order to cause the front face 205 to bow inwardly, as shown in Figure 9.

As is also shown in Figure 8, the front face 205 of the lid comprises a bowed (or recessed) area 208 which is created by curved fold 204a on the top face 204 of the lid 202. As is shown in Figure 9, the bowed area 208 creates a more rounded pack profile. Moreover, the bowed front faces 203 and 205 provide the pack with a shape that is similar to a hip-flask. Accordingly, the pack is substantially more comfortable to carry in a user's garment pocket than known packs.

Figure 9 is a side view of a pack in accordance with the second embodiment of the present invention. The pack 200 comprises a straight rear face 214, a straight bottom face 210, a straight top face 204 and a plurality of side bevels 207. The front face 203 of the pack body 201 is inwardly bowed. The front face 205 of the pack lid 202 continues the shape of the front face 203 of the pack body 201, until it reaches the recessed area 208. The continuity of the bowed front face 203 of the pack body 201 and the bottom portion of the bowed front face 205 of the pack lid 202 (i.e. proximate the point where the body 201 meets the lid 202) is caused by the continuity between the curved folds 206a and 206c and curved folds 206b and 206d, respectively. Again, recessed area 208 is created by curved fold 204a on top face 204 of the pack lid 202. In the second embodiment of the present invention, because the rear fold 204b is not curved, the rear face 213 of the lid 202 will not will not be recessed.

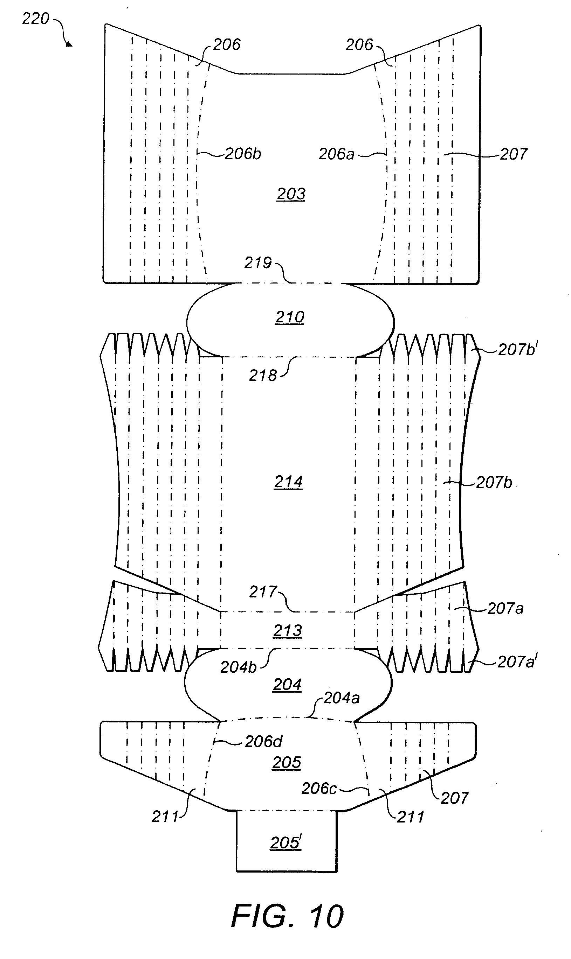

Figure 10 shows a blank 220 for making the pack of Figures 6 to 9. The blank 220 comprises a plurality of panels separated by fold lines (represented by broken lines) and cut lines (represented by solid lines). Panel 205' is connected to front face 205 of the pack lid 202. Arched-edged front bevels 211 are connected to front face 205 by fold lines 206c and 206d. Arched-edged front bevels 211 are connected to side bevels 207 on either side of the pack lid 202. Front face 205 is connected to top face 204 by curved fold 204a.

Top face 204 is connected to the rear face 213 of the pack lid 202 by straight fold 204b. On each side of rear face 213, reinforcement side bevels 207a extend outwardly. Each reinforcement side bevel 207a comprises a fixing tab 207a' at its top edge. Rear face 213 of the pack lid 202 is connected to the rear face 214 of the pack body 201 by fold line 217. On each side of rear face 214, reinforcement side bevels 207b extend outwardly. Each reinforcement side bevel 207b comprises a fixing tab 207b' at its bottom edge. Bottom face 210 is connected to rear face 214 by way of fold line 218. As will be appreciated, the bottom face of a pack in accordance with the present invention can be of any suitable shape, depending on the shape of the pack's sides. For example, the shape of the bottom face could be substantially rectangular.

The bottom face 210 is connected to the front face 203 of the pack body 201 by way of fold line 219. Front face 203 is connected to arched-edged front bevels 206 by way of fold lines 206a and 206b. Side bevels 207 extend outwardly from the straight edge of arched-edged front bevels 206.

With reference to Figure 10, the method of folding blank 220 will now be described. First, rear face 214 is folded at a right angle with respect to bottom face 210 around fold line 218. Fixing tabs 207b' are then fixed to the inside of bottom face 210. The fixing tabs 207b' can be fixed to the bottom face 210 by any known means including, but not limited to, gluing and bonding.

Then, the front face 203 is folded at a right angle with respect to bottom face 210 around fold line 219. Side bevels 207 are wrapped around corresponding reinforcement side bevels 207b and fixed thereto. The front face 203, bottom face 210 and rear face 214 now form the main part of the pack body 201. At this point, a collar, as shown in Figure 5a is inserted into the pack body 201 in the same way as described in reference to the fist embodiment of the present invention. As will be appreciated, whilst the collar 124 will contribute to the aesthetics of the pack, it will also increase the radial strength of the pack, particularly because the collar 124 extends completely around the interior circumference of the pack body 201.

Once the pack body has been created, panel 205' is folded at a 180 degree angle with respect to front face 205, and is fixed to the inner face thereof. Then, front face 205 is folded at a right angle with respect to top face 204 along curved fold line 204a. Top face 204 is then folded at a right angle with respect of rear face 213, along straight fold line 204b. Fixing tabs 207a' are then fixed to the inside of top face 204. The fixing tabs 207a' can be fixed to the top face 204 by any known means including, but not limited to, gluing and bonding. Side bevels 207 of the lid 202 are then wrapped around corresponding reinforcement side bevels 207a and fixed thereto.

As will be appreciated, whilst the blank 220 is flat when initially cut from a piece of cardboard, curved folds 204a, 206a, 206b, 206c and 206d will result in bowed front faces 203 and 205, as well as recess 208.

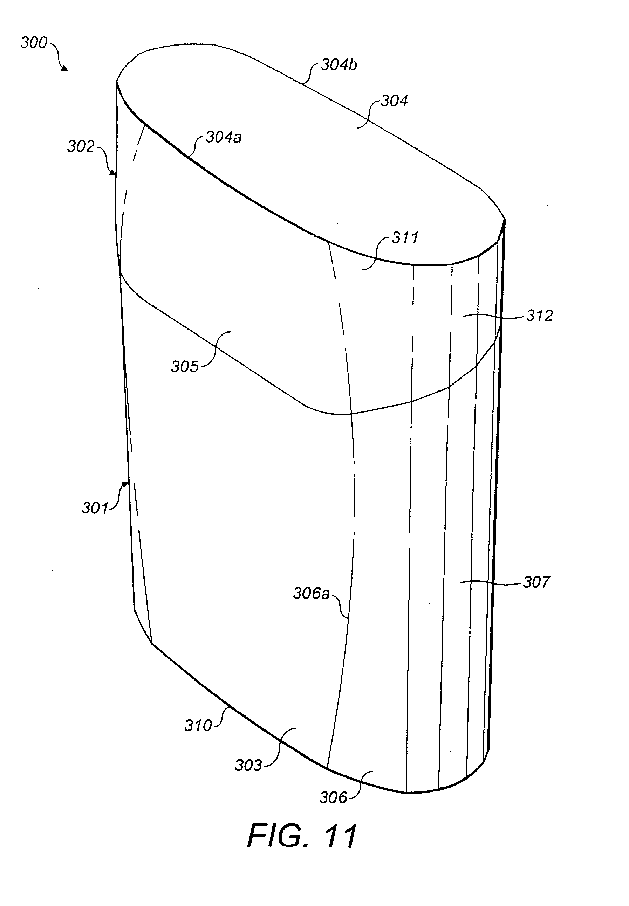

Figure 11 is a perspective view of a hinged-lid pack 300 in accordance with a third embodiment of the present invention. The pack 300 comprises a main body 301 and a lid 302. The main body 301 comprises a bowed front face 303, arched-edged bevels 306, side bevels 307 and bottom face 310. The lid 302 comprises front face 305, arched-edged bevels 311, top face 304 and side bevels 312.

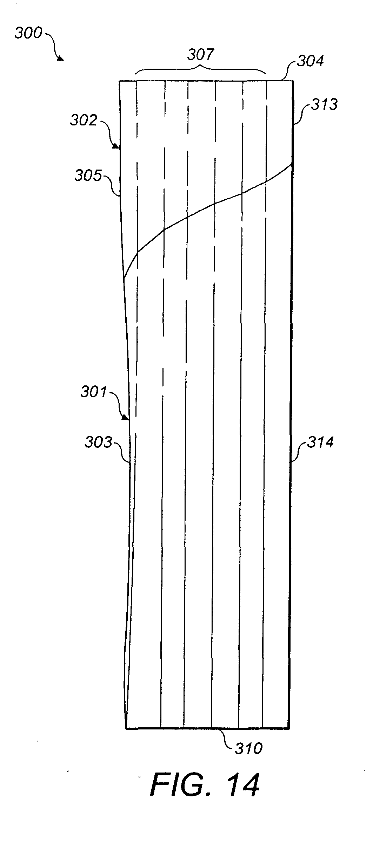

An arched-edged bevel 306 is situated on either side of the bowed front face 303. The arched fold lines 306a, 306b of the arched-edged bevels 306 cause the front face 303 of the pack main body 301 to bow inwardly, as shown in Figure 14. The arched fold lines 306c, 306d of the arched-edged bevels 311 cause the front face 305 of the pack lid 302 to continue the bow of the front face 305 into the lid 102, as shown in Figure 14.

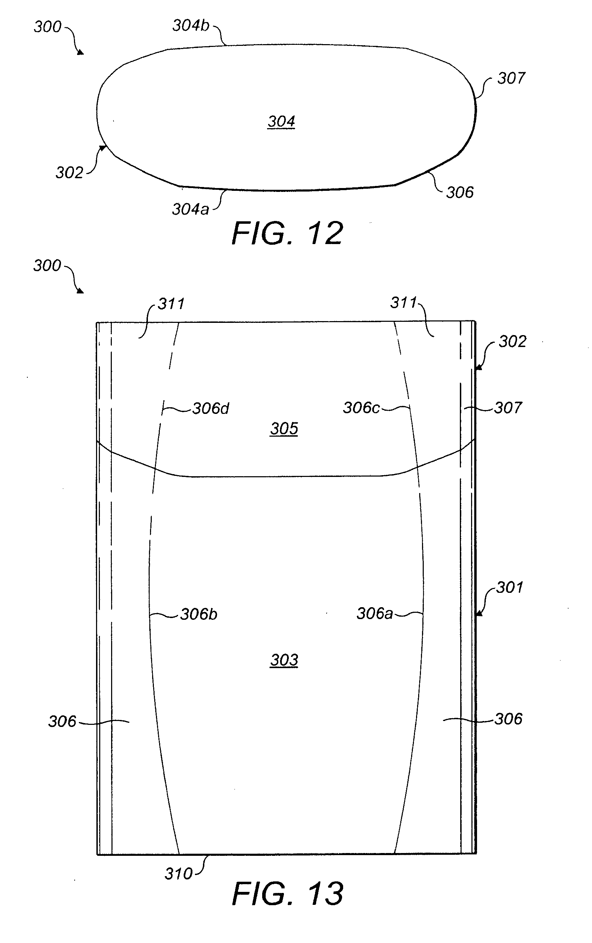

Figure 12 is a top view of the hinged-lid pack in accordance with a first embodiment of the present invention. As can be seen, the top face is defined by the top edges of the plurality of the arched-edged bevels 306, the plurality of side bevels 307, the front fold 304a and the rear fold 304b. As will be appreciated, dissimilarly to the first and second embodiments described above, the third embodiment of the present invention does not comprise inwardly curved folds on the top face 304 of the pack lid 302. Accordingly, and as shown in Figure 14, the bowing of front faces 303 and 305 will extend from substantially the bottom face 310 of the pack to substantially the top face 304 of the pack.

Figure 13 is a front view of the hinged-lid pack in accordance with the third embodiment of the present invention. As can be seen from Figure 13, the arched-edged front bevels 306 share a straight vertical fold with the forward-most side bevels 307 on both the right and left side of the pack body 301. Each arched-edged front bevel 306 also has a curved fold 306a, 306b. The curved folds 306a and 306b cooperate in order to cause the front face 303 to bow inwardly, as shown in Figure 14.

Similarly, and as can also be seen in Figure 13, the arched-edged front bevels 311 share a straight vertical fold with the forward-most side bevel 307 on the right and left side of the pack lid 302. Each arched-edged front bevel 311 also has a curved fold 306c, 306d. Curved folds 306c and 306d cooperate in order to cause the front face 305 to bow inwardly, as shown in Figure 14.

Figure 14 is a side view of a pack in accordance with the third embodiment of the present invention. The pack 300 comprises a straight rear face 314, a straight bottom face 310, a straight top face 304 and a plurality of side bevels 307. As will be appreciated, these faces need not be straight. The front face 303 of the pack body 301 is inwardly bowed. The front face 305 of the pack lid 302 continues the shape of the front face 303 of the pack body 301. The continuity of the bowed front face 303 of the pack body 301 and the bottom portion of the bowed front face 305 (i.e. proximate the point where the body 301 meets the lid 302) of the pack lid 302 is caused by the continuity between the curved folds 306a and 306c and curved folds 306b and 306d, respectively.

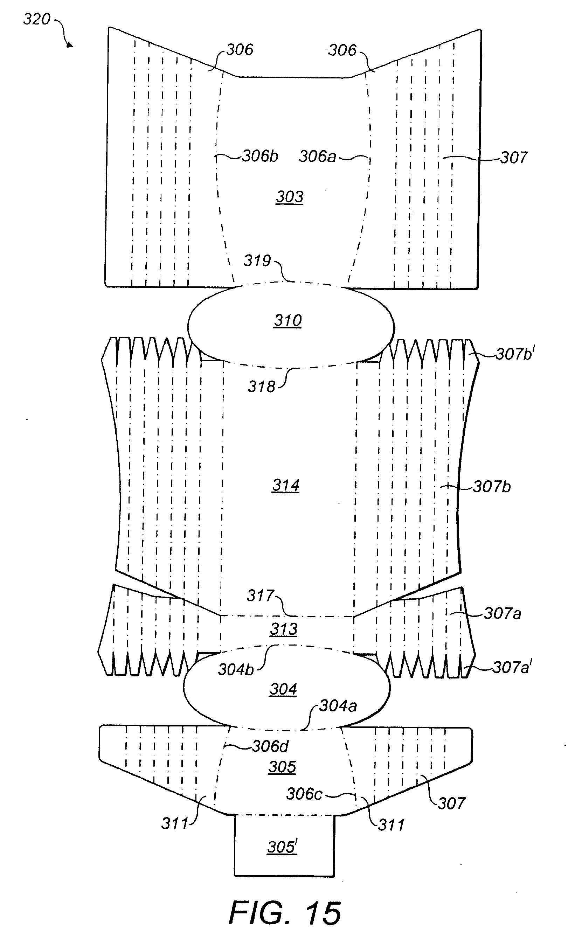

Figure 15 shows a blank 320 for making the pack of Figures 11 to 14. The blank 320 comprises a plurality of panels separated by fold lines (represented by broken lines) and cut lines (represented by solid lines). Panel 305' is connected to front face 305 of the pack lid 302. Arched-edged front bevels 311 are connected to front face 305 by fold lines 306c and 306d. Arched-edged front bevels 311 are connected to side bevels 307 on either side of the pack lid 302. Front face 305 is connected to top face 304 by fold 304a.

Top face 304 is connected to the rear face 313 of the pack lid 302 by fold 304b. On each side of rear face 313, reinforcement side bevels 307a extend outwardly. Each reinforcement side bevel 307a comprises a fixing tab 307a' at its top edge. Rear face 313 of the pack lid 302 is connected to the rear face 314 of the pack body 301 by fold line 317. On each side of rear face 314, reinforcement side bevels 307b extend outwardly. Each reinforcement side bevel 307b comprises a fixing tab 307b' at its bottom edge. Bottom face 310 is connected to rear face 314 by way of fold line 318. As will be appreciated, the bottom face of a pack in accordance with the present invention can be of any suitable shape, depending on the shape of pack's sides. For example, the shape of the bottom face could be substantially rectangular.

The bottom face 310 is connected to the front face 303 of the pack body 301 by way of fold line 319. Front face 303 is connected to arched-edged front bevels 306 by way of fold lines 306a and 306b. Side bevels 307 extend outwardly from the straight edge of arched-edged front bevels 306.

With reference to Figure 15, the method of folding blank 320 will now be described. First, rear face 314 is folded at a right angle with respect to bottom face 310 around fold line 318. Fixing tabs 307b' are then fixed to the inside of bottom face 310. The fixing tabs 307b' can be fixed to the bottom face 310 by any known means including, but not limited to, gluing and bonding.

The front face 303 is then folded at a right angle with respect to bottom face 310 around fold line 319. Side bevels 307 are wrapped around corresponding reinforcement side bevels 307b and fixed thereto. The front face 303, bottom face 310 and rear face 314 now form the main part of the pack body 301. At this point, a collar portion, as shown in Figure 5a, is inserted into the pack body in the manner described with reference to the first embodiment of the present invention. As will be appreciated, whilst the collar 124 will contribute to the aesthetics of the pack, it will also increase the radial strength of the pack, particularly because the collar 124 extends completely around the interior circumference of the pack body 301.

Once the pack body has been created, panel 305' is folded at a 180 degree angle with respect to front face 305, and is fixed to the inner face thereof. Then, front face 305 is folded at a right angle with respect to top face 304 along fold line 304a. Then, top face 304 is folded at a right angle with respect of rear face 313, along fold line 304b. Fixing tabs 307a' are then fixed to the inside of top face 304. The fixing tabs 307a' can be fixed to the top face 304 by any known means including, but not limited to, gluing and bonding. Side bevels 307 of the lid 302 are then wrapped around corresponding reinforcement side bevels 307a and fixed thereto. Whilst the blank 320 is flat when initially cut from a piece of cardboard, curved folds 306a, 306b, 306c and 306d will result in bowed front faces 303 and 305.

As will be appreciated by the skilled reader, because the arched-edged front bevels 106, 206, 306 and 111, 211, 311 share a straight vertical fold with the forward-most side bevel 107, 207, 307 on both the right and left side of the pack body 101, 201, 301 and lid 102, 202, 302, the side faces of a pack in accordance with any embodiment described herein need not be oval in shape and comprise a plurality of bevels 107, 207, 307. For example, the side faces of a pack in accordance with the present invention can simply be straight, thereby creating a pack having a rectangular profile when viewed from above. Moreover, in embodiments in which the sides of the packs are constructed of bevels, any number of bevels can be used for either side.

The skilled reader will appreciate the features described with reference to the above embodiments can be combined in any number of ways. For example, a pack in accordance with the present invention can comprise a bowed front face, a lid portion comprising recessed front and/or rear faces or a combination thereof.

As will also be appreciated by the skilled reader, the advantageous shape of the pack of the present invention is independent of the position or construction of the lid. For example, a pack in accordance with the present invention could comprise any number of lid types including, but not limited to, pack lids which open from the side of the pack and lids which cover the entire front face of the pack.

## Claims

1. A cigarette pack comprising:
a box having a top face (104), a bottom face (110), and a plurality of longitudinal faces connecting the top face to the bottom face, the longitudinal faces including:
a front face (103); the pack further comprising a straight rear face (114);
the pack being **characterised by**:
a first arched-edged bevel (106) situated on one side of the front face (103), the first arched-edged bevel (106) being attached to the front face (103) by a first longitudinal curved fold line (106a); and
a second arched-edged bevel (106) situated on the other side of the front face (106) and being attached to the front face by a second longitudinal curved fold line (106b);
wherein the first and second longitudinal curved fold lines (106a, 106b) are curved away from the centre of the front face (103) such that the front face (103) is at least partially concavely bowed in a longitudinal direction;
the plurality of longitudinal faces further including:
a first plurality of side bevels (107) arranged to connect the first arched-edged bevel (106) to the straight rear face (114); and
a second plurality of side bevels arranged to connect the second arched-edged bevel (106) to the straight rear face (114).

2. A cigarette pack in accordance with claim 1, wherein the first and second fold lines (106a, 106b) are curved away from the centre of the front face (103) such that the front face is concavely bowed in a lateral direction.

3. A cigarette pack in accordance with claim 2 , wherein the front face (103) is concavely bowed in a longitudinal direction from a location substantially adjacent the top face (104) to an area substantially adjacent the bottom face (110).

4. A cigarette pack in accordance with any of the preceding claims, further comprising: a lid (102), hingedly connected to at least one of the longitudinal faces of the box.

## Patentansprüche

1. Zigarettenpackung, umfassend:
eine Schachtel mit einer Oberseitenfläche (104), einer Unterseitenfläche (110) und einer Vielzahl von Längsseitenflächen, welche die Oberseitenfläche mit der Unterseitenfläche verbinden, wobei die Längsseitenflächen Folgendes beinhalten:
eine Vorderseitenfläche (103),
wobei die Packung ferner eine gerade Rückseitenfläche (114) aufweist,
wobei die Packung gekennzeichnet wird durch:
eine erste gebogen-kantige Fase (106), die sich an einer Seite der Vorderseitenfläche (103) befindet, wobei die erste gebogen-kantige Fase (106) mit einer ersten gekrümmten Längsfaltlinie (106a) an der Vorderseitenfläche (103) angebracht ist, und
eine zweite gebogen-kantige Fase (106), die sich an der anderen Seite der Vorderseitenfläche (106) befindet und mit einer zweiten gekrümmten Längsfaltlinie (106b) an der Vorderseitenfläche angebracht ist,
wobei die erste und die zweite gekrümmte Längsfaltlinie (106a, 106b) von der Mitte der Vorderseitenfläche (103) weg gekrümmt sind, so dass die Vorderseitenfläche (103) in einer Längsrichtung wenigstens teilweise konkav gebogen ist,
wobei die Vielzahl von Längsseitenflächen ferner Folgendes beinhaltet:
eine erste Vielzahl von Seitenfasen (107), die angeordnet sind, um die erste gebogen-kantige Fase (106) mit der geraden Rückseitenfläche (114) zu verbinden, und
eine zweite Vielzahl von Seitenfasen, die angeordnet sind, um die zweite gebogen-kantige Fase (106) mit der geraden Rückseitenfläche (114) zu verbinden.

2. Zigarettenpackung nach Anspruch 1, wobei die erste und die zweite Faltlinie (106a, 106b) von der Mitte der Vorderseitenfläche (103) weg gekrümmt sind, so dass die Vorderseitenfläche in einer seitlichen Richtung konkav gebogen ist.

3. Zigarettenpackung nach Anspruch 2, wobei die Vorderseitenfläche (103) von einer Stelle, die im Wesentlichen an die Oberseitenfläche (104) angrenzt, bis zu einem Bereich, der im Wesentlichen an die Unterseitenfläche (110) angrenzt, in einer Längsrichtung konkav gebogen ist.

4. Zigarettenpackung nach einem der vorhergehenden Ansprüche, die ferner Folgendes aufweist: einen Deckel (102), der an wenigstens einer der Längsseitenflächen der Schachtel angelenkt ist.

## Revendications

1. Paquet de cigarettes comportant:
une boîte dotée d'une face supérieure (104), d'une face inférieure (110) et d'une pluralité de faces longitudinales reliant la face supérieure à la face inférieure, les faces longitudinales comprenant:
une face à l'avant (103); le paquet comportant: par ailleurs une face arrière rectiligne (114);
le paquet étant **caractérisé en ce que**:
un premier biseau à bord cintré (106) est situé sur un des côtés de la face avant (103), le premier biseau à bord cintré (106) étant fixé à la face avant (103) au moyen d'une première ligne de pli (106a) longitudinale courbe; et
un deuxième biseau à bord cintré (106) est situé de l'autre côté de la face avant (106), et il est fixé à la face avant au moyen d'une deuxième ligne de pli (106b) longitudinale courbe;
**caractérisé en ce que** les première et deuxième lignes de pli (106a, 106b) longitudinales courbes sont recourbées à partir du centre de la face avant (103) de telle manière que la face avant (103) se trouve bombée du moins en partie dans le sens longitudinal;
la pluralité de faces longitudinales comprenant par ailleurs:
une première pluralité de biseaux latéraux (107) prévus de manière à relier le premier biseau à bord cintré (106) à la face arrière rectiligne (114); et
une deuxième pluralité de biseaux latéraux prévus de manière à relier le deuxième biseau à bord cintré (106) à la face arrière rectiligne (114).

2. Paquet de cigarettes selon la revendication 1, **caractérisé en ce que** les première et deuxième lignes de pli (106a, 106b) sont recourbées à partir du centre de la face avant (103) de telle façon que la face avant se trouve bombée de manière concave dans le sens latéral.

3. Paquet de cigarettes selon la revendication 2, **caractérisé en ce que** la face avant (103) se trouve bombée de manière concave dans le sens longitudinal à partir d'un endroit essentiellement adjacent à la face supérieure (104) et vers un endroit essentiellement adjacent à la face inférieure (110).

4. Paquet de cigarettes selon l'une quelconque des revendications précédentes, comportant par ailleurs un couvercle (102) raccordé par des charnières au moins à l'une des faces longitudinales de la boîte.
